# EUROPEAN PATENT SPECIFICATION

(11) **EP 4 439 273 B1**
(45) Date of publication and mention of the grant of the patent: **25.11.2026**
(21) Application number: 23165987.1
(22) Date of filing: 31.03.2023
(51) Int. Cl.: G06F 8/30, G06F 11/3668, G06N 3/045, G06N 3/088, G06F 40/20, G06F 11/34

(54) **LANGUAGE MODELS FOR AUTOMATIC MICROBENCHMARK GENERATION**
SPRACHMODELLE ZUR AUTOMATISCHEN MIKROBENMARKERERZEUGUNG
MODÈLES LINGUISTIQUES POUR LA GÉNÉRATION AUTOMATIQUE DE MICROBLINMARK

(43) Date of publication of application: 02.10.2024
(73) Proprietor: Rockwell Collins, Inc., Cedar Rapids, IA 52498 (US)
(72) Inventor: PALOP, Hector, Cork, T23 XN53 (IE); DE LA CRUZ MARTÍNEZ, Raúl, Cork, T23 XN53 (IE); GARCIA GENER, Alejandro, Cork, T23 XN53 (IE)
(74) Representative: Dehns

(56) References cited:
- WO-A1-2023/014370
- CN-A- 115 344 504
- US-A1- 2022 138 240

## Description

### TECHNICAL FIELD

The technology described herein relates generally to performance testing of processing circuitry within electronic systems using so-called "microbenchmarks", i.e. in the form of software code portions that when executed by the processing circuitry will perform a specific task that is designed to test or measure a particular performance metric. In particular, the technology described herein relates to improved techniques for generating such "microbenchmarks".

### BACKGROUND

When designing electronic systems it is important to be able to reliably test the performance of the processing circuitry (components) within the electronic systems, especially for safety critical systems such as those employed in avionic environments, where higher levels of functional safety is desired.

To do this, it is known to test and measure the performance of the processing circuitry (components) using specific software code portions that are typically referred to as "microbenchmarks". A "microbenchmark" is either a program or routine to measure and test the performance of a single component or task. Microbenchmarks are used to measure simple and well-defined performance metrics such as elapsed time, rate of operations, bandwidth, or latency. Typically, microbenchmarks are associated with the testing of lower-level hardware components such as the CPU, and in particular at the microarchitecture level, and for a short period of time. Through the use of such microbenchmarks, it is thus possible to test the proper and timely functioning of the different individual components that make up a system.

One of the key requisites is that the instrumentation technique used should add as little overhead as possible in order to gather accurate performance metrics. Efficiently writing and evaluating microbenchmarks requires a commitment to speed and simplicity. This simplicity in microbenchmarks is what allows the user to narrow down the components and paths involved, streamlining the process of finding the root cause for performance issues.

Such microbenchmarks must however be carefully designed based on specific technical considerations of the internal functioning of the processing circuitry on which it is to be executed so as to be able to meaningfully test the performance of the specific microarchitecture of the system. That is, the microbenchmark, when executed, should control the internal functioning or operation of the processing circuit that is to be tested in a particular manner in order to perform a specific task to perform the desired testing. Correspondingly, designing such microbenchmarks relies on a technical understanding of the internal functioning of the system that is to be tested. Furthermore, for a given hardware architecture, including many processing components, there may be many hundreds if not thousands of microbenchmarks that are needed to perform the desired performance testing.

Thus, although microbenchmarks are relatively simple in nature, since they aim to measure the performance of the target component by means of small and specific blocks of code, designing effective microbenchmarks requires an expertise in understanding compiler behaviour and this makes them difficult for humans to design targeting a specific payload. For these reasons, a considerable amount of time and effort is currently required to generate suitable microbenchmarks.

The Applicants thus believe that there is room for improvement in this regard.

CN115344504 A discloses a software test case automatic generation method and tool based on demand specification. US2022138240 A1 discloses source code retrieval. WO2023/014370 A1 source code synthesis for domain specific languages from natural language text.

### SUMMARY

The invention is set out in the appended set of claims.

A first aspect of the technology described herein comprises a computer-implemented method of training a language model for generating software code portions ("microbenchmarks") that when executed by a processor within an electronic system are configured to perform a certain task for testing the performance of specific processing circuitry within the microarchitecture of the electronic system as claimed in claim 1.

The technology described herein generally relates to the use of language models (e.g., and more specifically, including so-called "large" language models) in order to improve the generation of "microbenchmarks" for performance testing of processing circuitry within electronic systems, e.g., and in particular, electronic hardware systems, including embedded systems.

It will be understood that a "language model" is a probability distribution over a sequence of words. Language models (including so-called "large" language models) are thus algorithms that can recognise and generate text and other content based on knowledge gained from massive training data sets. Thus, in the technology described herein, a language model is trained based on specific training data in order to generate improved "microbenchmark" code portions, as mentioned above. Such language models are in a general sense known the art and the technology described herein may in general use any suitable and desired model architecture, and the technology described herein thus relates to the optimisation of such models for the purpose of generating improved "microbenchmark" code portions, rather than to a specific model architecture or algorithm. For example, in embodiments, the language model may comprise a neural network such as a transformer model. However, other arrangements would be possible.

According to the technology described herein a language model is therefore trained using training data comprising a set of code portions representing "microbenchmarks" that have been previously validated, and which code portions are associated with a particular set of microarchitecture characteristics that the performance testing task that the code portion is designed to perform is designed to test. In this way, the training data is generated so as to better reflect the relationship between the validated microbenchmark code portions and the performance testing that they are designed to perform, in particular by encoding within the training data the (hardware) characteristics that the code portions are designed for testing. This then allows the training of a model that is better suited for generating such microbenchmarks (e.g. compared to a general purpose code-generating model) since the hardware relationships that would otherwise be missing are specifically encoded during the training process.

The technology described herein can therefore provide various benefits compared to other possible approaches.

For example, if a particular microbenchmark is designed to performance test an L1 cache having a certain size (e.g. 8 kB), if this microbenchmark were used in a system where the L1 cache is smaller, this may result in cache "thrashing", and hence poorer performance. However, this poor performance is a result of the microbenchmark not being properly tailored to the microarchitecture of the system being tested, rather than a meaningful measure of the performance of the system itself.

Because of the level of technical understanding of the internal functioning of the system that is required in order to construct meaningful microbenchmarks it is therefore difficult to automate the generation of microbenchmarks. For instance, the present inventors found that existing code-generating algorithms give relatively poorer results when applied to the task of generating microbenchmarks, such that in practice it is still necessary to design microbenchmarks manually. However, this is a significant task due to the sheer number of microbenchmarks that may be required for testing a given system.

These issues are solved by the technology described herein, which allows improved, automated microbenchmark generation, and in turn, allows improved operation of electronic systems as the performance of the components within such electronic hardware system can be more readily tested and measured using the generated microbenchmarks.

The training process itself may be performed in any suitable manner but in embodiments is performed using an unsupervised learning process where the training data is provided to the model without any explicit training instructions and the model itself effectively builds the relationships between the different elements in the training data. Various other arrangements would however be possible.

According to the invention, the training process is performed in multiple (two or more) stages. The training process described above comprises a second stage that is used to fine-tune a previously generated model for the purpose of generating the microbenchmarks. This has been found to provide improved overall model performance. Thus, in embodiments, a first language model is obtained wherein the first language model is pretrained on a dataset comprising a more general purpose software code repository (e.g. using open-source software code obtained from GitHub). In this way, the first language model can learn general code syntax. The training data of the technology described herein is then used to fine-tune the first language model for generating microbenchmarks, in particular by encoding the hardware relationships that would not typically be available in the general purpose software code repository used for the initial pre-training of the first language model.

In embodiments, further stages of filtering and/or clustering are employed in order to refine the output of the model. For instance, for a given prompt, the model may generate many possible results (samples). Thus, in embodiments, filtering and/or clustering is then applied to reduce the number of samples that are provided for output. Thus, in embodiments, the language model generates a plurality of candidate software code portions, and wherein the method further comprises applying one or more sampling or filtering techniques to select one or more software code portions for execution and evaluation. For example, the steps of sampling and filtering may comprise selecting from the plurality of candidate software code portions one or more software code portions that satisfy the instruction provided in the prompt. These outputs may, for instance be tested using a suitable code interpreter to validate them as (correct) solutions for the initial problem.

Two main approaches are contemplated for the training of the model.

In a first approach, the model is trained to generate microbenchmarks for various different microarchitectures. In that case, the prompt that is provided as input to the model should specify one or more microarchitecture characteristics of the system to be tested and then return an appropriate code portion (microbenchmark). To facilitate this, the training data should therefore be (and in embodiments is) explicitly labelled with the associated microarchitecture characteristics that the code portion is designed to test. This can therefore provide a flexible approach for generating microbenchmarks for a range of different systems.

Thus, in some embodiments, each of the plurality of code portions is further annotated with the set of microarchitecture characteristics that the code portion is associated with, such that the language model is operable to generate software code portions for different microarchitecture implementations, with the desired microarchitecture characteristics being provided as input to the model as part of the prompt.

The set of microarchitecture characteristics that the code portion is associated with, and that are used to annotate the training data, may - and in certain embodiments does - includes at least one of: (i) a type of the processing circuitry; (ii) a size of the processing circuitry; (iii) an instruction set architecture of the processing circuitry; (iv) a manufacturer of the processing circuitry. For instance, to give a specific example, the set of microarchitecture characteristics may describe a cache arrangement associated with the processing circuitry, e.g. in terms of the arrangement (i.e. the different levels of caching) and/or size of the caches that are provided in the cache system.

In the first approach, the prompt should therefore correspondingly specify the microarchitecture characteristics of the system that is to be tested in order for the model to generate a suitable microbenchmark having the desired microarchitecture characteristics.

In a second approach, the model may instead be trained to generate microbenchmarks only for a particular system having a certain (i.e. known) microarchitecture. In that case, there may be no need to explicitly label the training data with the microarchitecture characteristics, but instead the training data may be selected only to include code portions that relate to the microarchitecture of the specific system that is to be tested. The model in this case is therefore tied to a specific system microarchitecture. However, this is still useful as in general it may be required to generate hundreds (or thousands) of different microbenchmarks for a given system.

Thus, in other embodiments, the language model is trained to generate software code portions for a particular electronic system, and wherein the training data is selected to include only code portions that are associated with the microarchitecture of that electronic system.

It will be appreciated in this respect that the specific model of the second approach could be generated by fine-tuning the more general model of the first approach. That is, in a similar manner as discussed earlier for the case when the training is performed in multiple stages, the specific model of the second approach may be generated by first training a more general microbenchmark model that is agnostic as to the specific system microarchitecture, and then re-training the model based on specific training data for the desired system microarchitecture.

Various arrangements would be possible in this regard.

As mentioned above, the training data according to the technology described herein is generally annotated with respective information indicative of the specific performance testing task that the code portion is designed to perform. In embodiments, the training data is further annotated with the associated microarchitecture characteristics that the code portion is designed to test. Various other suitable annotations may also be provided to label the training data, as desired.

In embodiments, these annotations are provided in natural language. In this way, the model may be configured to process prompts that are provided in natural language format. However, other arrangements would be possible in this regard, and the prompts could also be provided in pseudo-code (or code), if desired (with the training data in that case being selected appropriately for that situation).

The technology described herein also extends to the language models that are generated in this way, and the use thereof to generate suitable "microbenchmarks".

Thus, a further aspect of the technology described herein comprises a language model for generating software code portions that when executed by a processor within an electronic system are configured to perform a certain task for testing the performance of specific processing circuitry within the microarchitecture of the electronic system, wherein the language model is generated by a method as described above, and wherein the language model is operable to receive as input a prompt requesting software code for testing the performance of a specific processing circuit within an electronic system having a particular microarchitecture and to output one or more software code portions for execution by a processor of the electronic system for testing the performance of the specified processing circuit.

A yet further aspect of the technology described herein comprises a method of generating software code portions that when executed by a processor within an electronic system are configured to perform a certain task for testing the performance of specific processing circuitry within the microarchitecture of the electronic system, the method using a language model that has been generated by a method as described above, the method comprising:
providing as input to the language model a prompt requesting software code for testing the performance of a specific processing circuit within an electronic system having a particular microarchitecture; and
the language model providing as output one or more software code portions for execution by a processor of the electronic system for testing the performance of the specified processing circuit.

The prompt in this case may then include one or more microarchitecture characteristics of the system that is to be tested. In some cases, the model user interface may even require these to be provided. Various other arrangements would be possible in this regard.

It will be appreciated that the methods described herein are generally computer-implemented. Thus, from further aspects there is provided a computer program product comprising instructions that when executed by a data processor perform a method as described above.

As will be appreciated by those skilled in the art, these additional aspects of the technology described herein can, and in embodiments do, include any one or more or all of the features of the technology described herein, as appropriate.

### BRIEF DECRIPTION OF THE DRAWINGS

A number of embodiments and examples will now be described to illustrate the technology described herein with reference to the following figures in which:
Figure 1 shows schematically an example electronic hardware system that may be desired to be tested;
Figure 2 shows schematically a language model that can be used according to an embodiment to generate "microbenchmarks" for testing an electronic hardware system like that shown in Figure 1;
Figure 3 shows schematically a training process according to an embodiment;
Figure 4 illustrates the form of training data according to an embodiment; and
Figure 5 is a flow chart illustrating the training process according to an embodiment.

Like reference numerals are used for like components where appropriate in the Figures.

### DETAILED DESCRIPTION

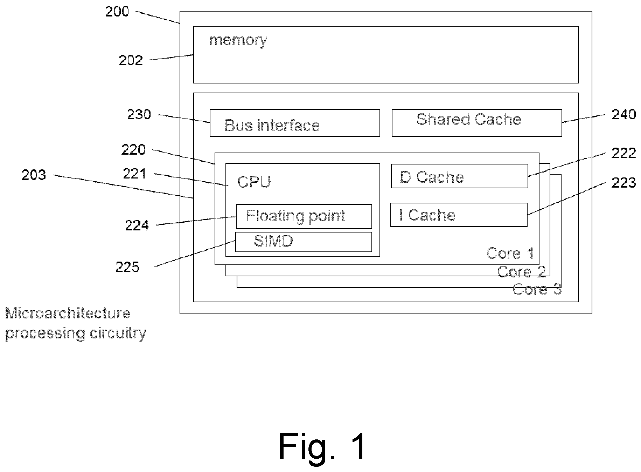

Figure 1 shows an example electronic hardware system 200 that may be desired to be tested and for which the language models of the technology described herein may therefore be employed in order to generate suitable "microbenchmarks" for performing such testing. As shown in Figure 1, the electronic hardware system 200 may generally comprise a (main) memory 202, and various processing circuitry 203. The arrangement of the processing circuitry 203 is referred to as the system "microarchitecture". The system "microarchitecture" thus reflects how the processing circuitry 203 is arranged within the electronic hardware system 200.

For the example shown in Figure 1 the processing circuitry 203 comprises a bus interface 230 configured to communicate with the memory 202 and other external components, a shared cache 240 via which the memory 202 can be accessed, and one or more processing cores 220 configured to communicate with the bus interface 230 and the shared cache 240. Each of the one or more processing cores 220 in this example comprises a respective CPU 221, which may include various functional units such as a floating point (arithmetic) unit 224, and a single instruction multiple data ("SIMD") engine 225. Each processing core 220 also has its own local cache system in this example including a data cache 222 for storing the data required for the processing, and an instruction cache 223 for storing the instructions that control the operation of the processing core 220, and to which the respective CPU 221 will have access to. It will be appreciated that Figure 1 is merely one example and that a given electronic hardware system may in general comprise any suitable and desired arrangement of processing circuitry.

In order to test the performance of the electronic hardware system 200 it may be desired to have the processing circuitry 203 execute one or more "microbenchmarks" i.e. software code portions that are designed to perform a certain task for testing the performance of a specific part of the microarchitecture processing circuitry 203. The processing circuitry 203 can thus execute the "microbenchmark", in particular using a scaffold that runs the microbenchmark payload multiple times by the microarchitecture processing circuitry 203, such that this repeat running of the payload can output a statistical estimate of performance metrics such as execution time. It will be appreciated that such "micro benchmarking" processes are known as such.

In the computer science domain, a microbenchmark is a synthetic application precisely designed to discover, test or assess the behaviour and performance of a specific component in a hardware architecture. A microbenchmark can include a common data access pattern, a sequence of operations or even a single instruction. The running time is usually measured in the order of milliseconds or less.

Thanks to micro benchmarking, users can gain detailed insights into the performance of hardware systems. A good microbenchmark can reveal unit costs for various operations which can better serve analysis when complete benchmarks are not representative of your applications software and system execution model. Microbenchmarks can also be used in framework tests where they help users obtain information on the volume and accuracy of data. In low abstraction level applications, microbenchmarks prove especially valuable for tracking performance. For instance, if it is desired to reveal how long a specific code pattern would take to execute, suitably designed microbenchmarks can be used to dig deep into the numbers and obtain real-world performance.

Microbenchmarks are relatively simple straightforward in nature, since they aim to measure the performance of the target component by means of small and specific blocks of code. However, designing effective microbenchmarks requires an expertise in understanding compiler behaviour. One of the key requisites is that the instrumentation technique used should add as little overhead as possible in order to gather accurate metrics. Efficiently writing and evaluating microbenchmarks requires a commitment to speed and simplicity. This simplicity in microbenchmarks is what allows the user to narrow down the components and paths involved, streamlining the process of finding the root cause for performance issues.

The accuracy of a microbenchmark depends on two critical tasks:
1. Wrapping the specialized code segment into a pay-load that faithfully recreates the execution conditions of the large application
2. Building a scaffold that runs the payload many times to get a statistical estimate of the execution time or other performance metrics.

Thus, despite being relatively simple in nature, microbenchmarks are nonetheless very particular in their implementation, and they require an expertise in compiler behaviour that makes them very difficult for humans to design targeting a specific payload.

The technology described herein particularly relates to the improved generation of such "microbenchmarks" using (large) language models, and more particularly to the training of such models in order to more efficiently generate "microbenchmarks" for testing electronic systems having particular microarchitecture characteristics.

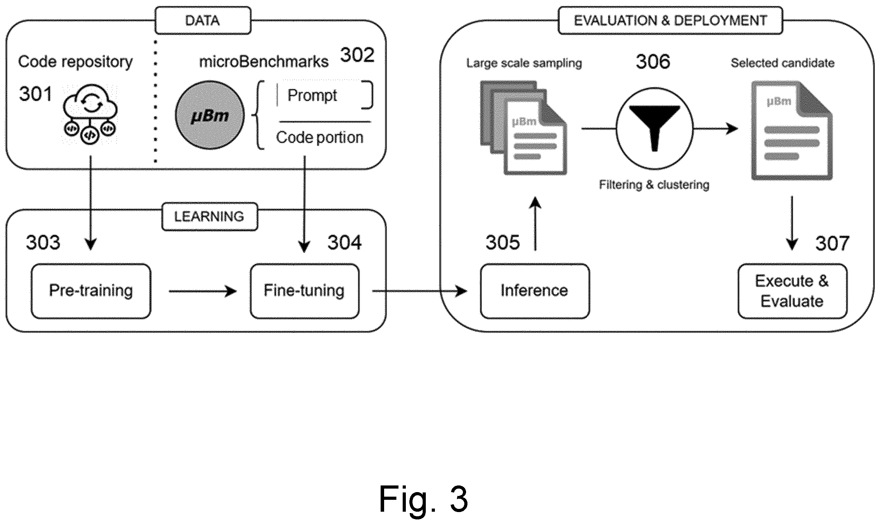

The technology described herein thus facilitates more automated generation of microbenchmarks that satisfy an initial instruction written in natural language. As will be explained further below, this is accomplished through the specific training, fine-tuning and post-process aggregation (see Figure 3) of a large language model suitable for the task. The initial instruction can potentially be in any language and of any length, assuming that these features are represented in the training data used in the fine-tuning process. The output will consist of a microbenchmark given in the language and requirements stated in the initial instruction.

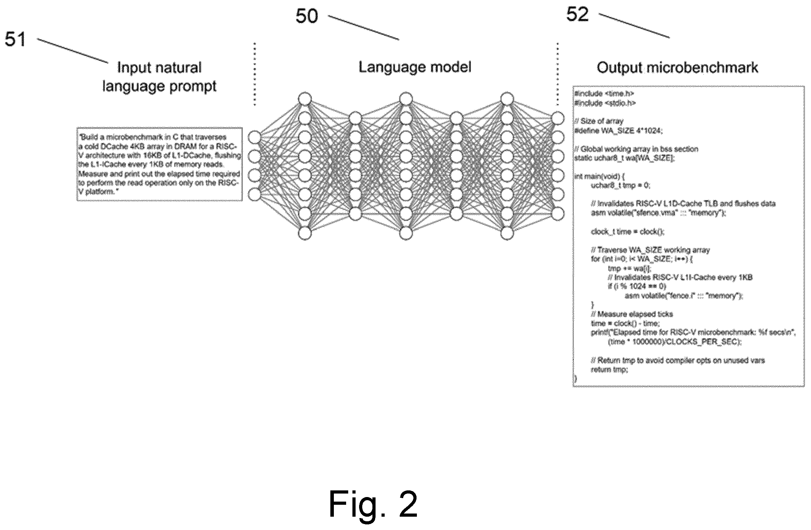

Figure 2 schematically illustrates the use of an exemplary language model 50 according to an embodiment to generate microbenchmarks for testing the performance of specific microarchitecture processing circuitry. As shown in Figure 2, the language model 50 is configured to, and operable to, receive as input a prompt from a user relating to a specific microarchitecture processing circuitry and to output one or more code portions 52 which correspond to a microbenchmark which when executed by a processor within an electronic hardware system are configured to perform a certain task for testing the performance of specific microarchitecture processing circuitry within the electronic hardware system.

As shown in Figure 2, the prompt 51 comprises an instruction to generate a microbenchmark corresponding to a code portion for performing a certain performance testing task for testing the performance of specific microarchitecture processing circuitry. In embodiments, as shown in Figure 2, the prompt may be provided in natural language. However, other arrangements would be possible.

This prompt 51 specifies the performance testing task that the code portion should perform when executed, which is can include an operation to perform or a sequence of operations to perform. For example, this task may include a sequence of operations which are a pattern of data accesses.

The prompt 51 may, and in this example does, also specify one or more microarchitecture characteristics of the specific microarchitecture processing circuitry which the code portion is to test. These microarchitecture characteristics may, for example, include the type of the microprocessor processing circuitry, the size of the processing circuitry specified, the instruction set architecture of the processing circuitry, etc.. For instance, to give a specific example, with reference to the microarchitecture processing circuitry 203 shown in Figure 1, the microarchitecture characteristics may include the size and type of a shared cache 240, the size and type of a data cache 222, the size and type of an information cache 223, the number of processing cores 220, the size and type of CPU 221, the presence and type of components, such as the floating point unit 224 and SIMD engine 225. Furthermore, the microarchitecture characteristics may also include the pipeline length and layout, and the cycle counts for instructions.

Additionally, the prompt 51 specifies one or more metrics relating to the performance testing task that should be provide as output when the code portion is executed. In many cases this output relates to a measured running time for completion of the task. Outputs may also be provided which relate to measured properties of the specific microarchitecture processing circuitry which is the subject of the testing, for example a number of registers, cache size, and/or memory size. The prompt 51 also specifies a certain software code language that the code portion should be provided in when generated by the language model 50, which may for example be C, C#, C++, JAVA, PYTHON, or any other software code language.

The language model 50 is in embodiments a neural network based language model, and in embodiments a transformer model. Transformer models utilise an approach of differentially weighting the significance of each part of the input data. The present inventors have recognised that while other models and architectures are available and widely used, in this case a transformer model is able to provide an especially effective handling of prompts from a user in the form of natural language prompts.

As such, when the natural language prompt 51 instructing the generation of a desired microbenchmark for a specific microarchitecture processing circuitry is input to the language model 50, it generates as output a microbenchmark which correspondingly when executed is configured to perform a certain task for testing the performance of a specific microarchitecture processing circuitry. In particular, and as will be described further below, the training of the model is performed accordingly to optimise the model for the generation of such microbenchmarks (e.g. rather than a more general purpose code-generating algorithm which would typically at least lack the specific microarchitectural knowledge to do this effectively).

As shown in Figure 2, the microbenchmark 52 which is generated by the language model 50 corresponds to a code portion comprising instructions which when executed by a processor such as processor 201 of electronic hardware system 200 cause the performance of a task for testing the performance of microarchitecture processing circuitry such as the microarchitecture processing circuitry 203 of electronic hardware system 200. In particular, the task involves measuring the running time elapsed for performing a sequence of operations which comprises a pattern of data accesses and flushes.

The microbenchmark 52 output by the language model 50 also comprises one or more comments for aiding the understanding of the code portion by a user. In doing so, the language model 50 can assist with the rapid assessment and deployment of the microbenchmark 52 by a user, thereby providing advantages in the development process.

Additionally, while Figure 2 shows the generation of a single microbenchmark, it is noted that the generation of this microbenchmark 52 may comprise the generation of a plurality of candidate microbenchmarks, followed by assessing the plurality of candidate microbenchmarks for the suitability of each of the plurality of candidate microbenchmarks to perform the certain task for testing the performance of the specific microarchitecture processing circuitry in the prompt 51, in order to select a final microbenchmark which is selected in dependence of the assessment to be optimal.

Figure 3 schematically illustrates a computer-implemented method of training and subsequently implementing a language model for generating microbenchmarks,. Training data is provided which comprises a first set of training data 301, the first set of training data 301 comprising a generic software code repository. This generic software code repository comprises a plurality of generic code portions, each of which are annotated with respective information indicative of a corresponding task. Some, the majority, or all of these generic code portions may be non-specific, such that they are not configured to be executed on a specific processing circuitry only. The plurality of generic code portions may comprise code portions in different respective software code languages. The information indicative of a corresponding task may comprise a prompt corresponding to the task, for example a natural language prompt.

This first set of training data is used to train a first language model. This training of a first language model using the first set of training data corresponds to pre-training 303.

The training data also comprises a corpus of microbenchmark-specific training data 302, the corpus of training data comprising a plurality of code portions, each of the plurality of code portions being a specific code portion designed to perform a certain performance testing task for testing the performance of a corresponding specific microarchitecture processing circuit. In other words, each of the plurality of code portions of the corpus of training data is configured to be executed for performance testing of a specific microarchitecture processing circuit, rather than being applicable to the testing of non-specific general processing circuits in a generic manner. The microbenchmark-specific training data 302 can then be used in a fine-tuning 304 step, as shown in Figure 3.

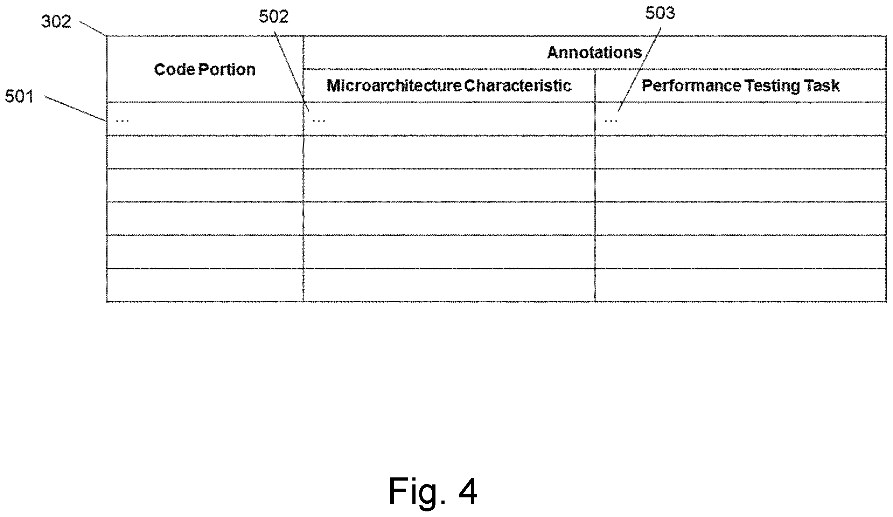

Figure 4 shows an example of the microbenchmark-specific training data 302. In particular, each code portion 501 of the corpus of training data, as discussed above, is designed to perform a certain performance testing task for testing the performance of a corresponding specific microarchitecture processing circuit. Some, most, or each of the code portions 501 are annotated with the microarchitecture characteristics 502 of the specific microarchitecture processing circuit to which the code portions correspond. For example, each code portion 501 may be annotated with microarchitecture characteristics 502 such as a type of the processing circuitry, a size of the processing circuitry, an instruction set architecture of the processing circuitry, and a manufacturer of the processing circuitry.

Furthermore, some, most, or each of the code portions 501 are also annotated with information indicative of the certain performance testing task that the code portion is designed to perform. For example, this information 503 may comprise one or more metrics relating to the performance testing task that should be provide as output when the code portion is executed, and a software code language that the code portion should be provided in. Additionally or alternatively, the information indicative of the certain performance testing task may comprise a corresponding prompt comprising an exemplary instruction to generate the specific corresponding code portion, for example a corresponding natural language prompt.

As discussed above, the present inventors have recognised that by training the language model using the corpus of data comprising specific code portions which are annotated with these pieces of data, in particular the microarchitecture characteristics of the corresponding specific microarchitecture processing circuitry, the training is much more effective at delivering a language model which is not used for the generation of general benchmarks, but instead specific microbenchmarks. As such, this training data is particularly advantageous.

In another approach, the code portions 501 of the microbenchmark-specific training data 302 may be selected only to include code portions that relate to the microarchitecture of a specific system that is to be tested. The model in this case is therefore tied to a specific system microarchitecture, such as microarchitecture processing circuitry 203 of electronic hardware system 200. While this may result in the training of a model which is trained to generate microbenchmarks only for a particular system having a certain (i.e. known) microarchitecture, this is still useful as in general it may be required to generate hundreds (or thousands) of different microbenchmarks for a given system.

In this approach, the training data 302 is selected to include only code portions 502 that are associated with the microarchitecture of that electronic system 200. As a result, the model which is trained using this training data 302 is trained to generate software code portions for a particular electronic system.

After the language model has been trained, it may be executed for the generation of microbenchmarks. While an example of application of the language model has been discussed with regard to Figure 2, we note that additional steps may also be used in this process. First, inference 305 may be performed, in which a prompt comprising an instruction to generate a microbenchmark corresponding to a code portion for performing a certain performance testing task for testing the performance of specific microarchitecture processing circuitry is provided to the language model as an input. This prompt may have any or all of the properties of prompt 51 discussed with regard to Figure 2. A plurality of candidate code portions may then be generated as an output by the language model, each of which may be a different candidate microbenchmark corresponding to the input.

The plurality of candidate code portions may the be run through a series of filtering and clustering operations 306, configured to assess the suitability of each of the plurality of candidate code portions to perform the certain task for testing the performance of the specific microarchitecture processing circuitry in the prompt. One or more optimal code portions may then be selected in dependence of the assessment of the filtering and clustering operations. The one or more optimal code portions can then be executed by an electronic hardware comprising the specific microarchitecture processing circuitry specified in the prompt.

Thus, referring back to Figure 3, the following components and steps are utilised:
1. Code repository 301: A large database containing a plethora of code and software projects, in no particular programming language.
2. microbenchmarks 302: A more reduced dataset specifically containing microbenchmark labelled with a short natural language description to be used as the instruction of the microbenchmark.
3. Pre-training 303: The language model fits on code repository data begin to capture the syntaxis of generic human code.
4. Fine-tuning 304: The model now fits on a dataset composed with pairs of instruction-microbenchmark data, meant to familiarize the model with the structure of microbenchmark implementations and their relationship with a natural language instruction.
5. Inference 305: After the predictor is fully trained, the inference of the model a set of plausible but different microbenchmark solutions.
6. Filtering & Clustering 306: The set of predictions is run through a series of filtering and clustering operations that ensures the best possible solution out of the initial set of possible outcomes.
7. Execute & Evaluate 307: The final solution can be used for deployment or for validation purposes.

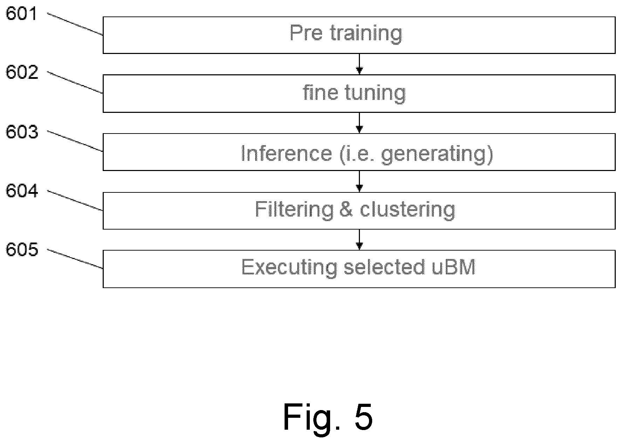

Figure 5 is a flow diagram illustrating the overall method. In step 601, a first language model is trained on a first set of training data such as the first set of training data 301 comprising a generic software code repository.

In step 602, a language model such as the first language model trained on the first set of training data, is trained on a corpus of training data such as the corpus of microbenchmark-specific training data 302 comprising a plurality of code portions, each of the plurality of code portions being a specific code portion designed to perform a certain performance testing task for testing the performance of a corresponding specific microarchitecture processing circuit. This fine-tuning (at step 602) trains the language model for generating software code portions ("microbenchmarks") that when executed by a processor within an electronic hardware system such as electronic hardware system 200 are configured to perform a certain task for testing the performance of specific microarchitecture processing circuitry such as the specific microarchitecture processing circuitry 203.

In step 603, the language model trained in step 602, such as language model 50, is executed, for example by processing system 110, in order to generate one or more code portions. This comprises inputting, for example by a user, a prompt such as prompt 51, which comprises an instruction to generate a microbenchmark corresponding to a code portion for performing a certain performance testing task for testing the performance of specific microarchitecture processing circuitry such as the specific microarchitecture processing circuitry 203. The language model then generates as output one or more code portions, such as microbenchmark 51, comprising instructions which when executed cause the performance of a task for testing the performance of microarchitecture processing circuitry such as the microarchitecture processing circuitry 203 of electronic hardware system 200.

In step 604, in the case that a plurality of code portions are generated in step 603, these plurality of code portions are assessed to assess the suitability of each of the plurality of candidate code portions to perform the certain task for testing the performance of the specific microarchitecture processing circuitry in the prompt of step 603. One or more optimal code portions may then be selected in dependence of the assessment.

In step 605, one or more code portions such as the one or more code portions generated in step 603 (or the one or more optimal code portions selected in step 604), are executed by an electronic hardware system such as electronic hardware system 203. This comprises executing by a processor of an electronic hardware system the one or more software code portions in order to perform a certain task for testing the performance of microarchitecture processing circuitry such as microarchitecture processing circuitry 203 of the electronic hardware system 200. This can output one or more metrics relating to the performance of the performance testing task.

While Figure 5 shows each of steps 601 to 605, it will be appreciated that various of these steps may be performed by different and separate components. As such, various of these steps may be performed at different times and locations, and as such may be performed in isolation of one another, or in any combination contemplated by the skilled person.

It will be appreciated from the above that the technology described herein can therefore significantly reduce the burden on expert resource and experimentation time in order to rapidly generate microbenchmarks that reliably test out the performance of new or already existing pieces of code. The technology described herein may therefore provide various benefits compared to other possible approaches in terms of reducing the expertise and time investment required to design and develop microbenchmarks for target component, and in general therefore in terms of improving the performance of electronic systems. Apart from that, the technology described herein also accelerates hardware characterization to ease porting. For example, microbenchmarks are used for testing mapping and scheduling on new platforms, and can also be used for configuring the new platform to comply with software requirements and certification. The technology described herein can therefore significantly accelerate these processes.

The foregoing detailed description has been presented for the purposes of illustration and description. It is not intended to be exhaustive or to limit the technology to the precise form disclosed. Many modifications and variations are possible in the light of the above teaching. The described embodiments were chosen in order to best explain the principles of the technology and its practical application, to thereby enable others skilled in the art to best utilise the technology in various embodiments and with various modifications as are suited to the particular use contemplated. It is intended that the scope be defined by the claims appended hereto.

## Claims

1. A computer-implemented method of training a language model (50) for generating software code portions (52) that when executed by a processor within an electronic system are configured to perform a certain task for testing the performance of specific processing circuitry within the microarchitecture of the electronic system,
wherein the language model (50) is operable to receive as input a prompt (51) requesting software code for testing the performance of a specific processing circuit within an electronic system having a particular microarchitecture and to output one or more software code portions (52) for execution by a processor of the electronic system for testing the performance of the specified processing circuit,
the method comprising a training process performed in multiple stages, comprising:
obtaining a first language model that has been trained on a first set of training data (301), the first set of training data comprising a generic software code repository; and then
re-training the first language model to fine-tune the model for the generating of the software code portions (52) that when executed by a processor within an electronic system are configured to perform a certain task for testing the performance of specific processing circuitry within the microarchitecture of the electronic system, wherein the re-training is performed by:
providing, as input to the re-training process, a corpus of training data (302) that comprises a plurality of code portions (501), each of the plurality of code portions (501) being designed to perform a certain task for testing the performance of specific processing circuitry within an electronic system having a particular microarchitecture, each of the plurality of code portions (501) thus being associated with a particular microarchitecture characteristic, and wherein each of the plurality of code portions (201) is annotated with respective information indicative of the specific performance testing task that the code portion is designed to perform; and
re-training the language model using the provided training data;
wherein:
(a) each of the plurality of code portions is further annotated with the set of microarchitecture characteristics (502) that the code portion is associated with, such that the language model is operable to generate software code portions for different microarchitecture implementations, with the desired microarchitecture characteristics being provided as input to the model as part of the prompt (51), and wherein the set of microarchitecture characteristics that the code portion is associated with, and that are used to annotate the training data, includes at least one of: (i) a type of the processing circuitry; (ii) a size of the processing circuitry; (iii) a cache arrangement associated with the processing circuitry; (iv) an instruction set architecture of the processing circuitry; (v) a manufacturer of the processing circuitry; or
(b) wherein the language model is trained to generate software code portions for a particular electronic system, having a defined microarchitecture, and wherein the training data is selected to include only code portions that are associated with the microarchitecture of that electronic system.

2. The method of any preceding claim, wherein the information indicative of the certain performance testing task that the code portion is designed to perform includes one or more of: (i) one or more metrics relating to the performance testing task that should be provide as output when the code portion is executed; (ii) a software code language that the code portion should be provided in.

3. The method of claim 1 or 2, wherein the code portions are annotated with natural language information, such that the model is configured to process prompts that are provided in natural language.

4. A computer program product comprising instructions that when executed by a data processor perform a method as claimed in any preceding claim.

5. A language model (50) for generating software code portions that when executed by a processor within an electronic system are configured to perform a certain task for testing the performance of specific processing circuitry within the microarchitecture of the electronic system, wherein the language model (50) is generated by a method as claimed in any of claim 1 to 3, and wherein the language model (50) is operable to receive as input a prompt (51) requesting software code for testing the performance of a specific processing circuit within an electronic system having a particular microarchitecture and to output one or more software code portions (52) for execution by a processor of the electronic system for testing the performance of the specified processing circuit.

6. A method of generating software code portions (52) that when executed by a processor within an electronic system are configured to perform a certain task for testing the performance of specific processing circuitry within the microarchitecture of the electronic system, the method using a language model (50) that has been generated by a method as claimed in any of claim 1 to 3, the method comprising:
providing as input to the language model (50) a prompt (51) requesting software code for testing the performance of a specific processing circuit within an electronic system having a particular microarchitecture; and
the language model (50) providing as output one or more software code portions (52) for execution by a processor of the electronic system for testing the performance of the specified processing circuit.

7. The method of claim 6, wherein the language model generates a plurality of candidate software code portions, and wherein the method further comprises applying one or more sampling or filtering techniques to select one or more software code portions for execution and evaluation.

## Patentansprüche

1. Computerimplementiertes Verfahren zum Trainieren eines Sprachmodells (50) zum Erzeugen von Softwarecodeabschnitten (52), die bei Ausführung durch einen Prozessor innerhalb eines elektronischen Systems dazu ausgelegt sind, eine bestimmte Aufgabe zur Prüfung der Leistung einer spezifischen Verarbeitungsschaltung innerhalb der Mikroarchitektur des elektronischen Systems durchzuführen,
wobei das Sprachmodell (50) betreibbar ist, um als Eingabe eine Eingabeaufforderung (51) zu empfangen, die Softwarecode zur Prüfung der Leistung einer spezifischen Verarbeitungsschaltung innerhalb eines elektronischen Systems mit einer bestimmten Mikroarchitektur anfordert, und um einen oder mehrere Softwarecodeabschnitte (52) zur Ausführung durch einen Prozessor des elektronischen Systems zur Prüfung der Leistung der spezifizierten Verarbeitungsschaltung auszugeben,
wobei das Verfahren einen in mehreren Stufen durchgeführten Trainingsprozess umfasst, umfassend:
Erhalten eines ersten Sprachmodells, das auf einem ersten Satz von Trainingsdaten (301) trainiert wurde, wobei der erste Satz von Trainingsdaten ein generisches Softwarecode-Repository umfasst; und anschließend
Neutrainieren des ersten Sprachmodells, um das Modell für die Erzeugung der Softwarecodeabschnitte (52), die bei Ausführung durch einen Prozessor innerhalb eines elektronischen Systems dazu ausgelegt sind, eine bestimmte Aufgabe zur Prüfung der Leistung einer spezifischen Verarbeitungsschaltung innerhalb der Mikroarchitektur des elektronischen Systems durchzuführen, feinabzustimmen, wobei das Neutrainieren durchgeführt wird durch:
Bereitstellen, als Eingabe für den Neutrainierungsprozess, eines Korpus von Trainingsdaten (302), der eine Vielzahl von Codeabschnitten (501) umfasst, wobei jeder der Vielzahl von Codeabschnitten (501) dazu ausgelegt ist, eine bestimmte Aufgabe zur Prüfung der Leistung einer spezifischen Verarbeitungsschaltung innerhalb eines elektronischen Systems mit einer bestimmten Mikroarchitektur durchzuführen, wobei jeder der Vielzahl von Codeabschnitten (501) somit mit einer bestimmten Mikroarchitektur-Charakteristik verbunden ist, und wobei jeder der Vielzahl von Codeabschnitten (201) mit entsprechenden Informationen annotiert ist, die die spezifische Leistungsprüfungsaufgabe angeben, die der Codeabschnitt durchzuführen ausgelegt ist; und
Neutrainieren des Sprachmodells unter Verwendung der bereitgestellten Trainingsdaten;
wobei:
(a) jeder der Vielzahl von Codeabschnitten weiterhin mit dem Satz von Mikroarchitektur-Charakteristiken (502) annotiert ist, mit denen der Codeabschnitt verbunden ist, derart, dass das Sprachmodell betreibbar ist, um Softwarecodeabschnitte für unterschiedliche Mikroarchitektur-Implementierungen zu erzeugen, wobei die gewünschten Mikroarchitektur-Charakteristiken als Eingabe für das Modell als Teil der Eingabeaufforderung (51) bereitgestellt werden, und wobei der Satz von Mikroarchitektur-Charakteristiken, mit denen der Codeabschnitt verbunden ist und die zur Annotierung der Trainingsdaten verwendet werden, mindestens eines von Folgenden umfasst: (i) einen Typ der Verarbeitungsschaltung; (ii) eine Größe der Verarbeitungsschaltung; (iii) eine mit der Verarbeitungsschaltung verbundene Cache-Anordnung; (iv) eine Befehlssatzarchitektur der Verarbeitungsschaltung; (v) einen Hersteller der Verarbeitungsschaltung; oder
(b) wobei das Sprachmodell trainiert ist, um Softwarecodeabschnitte für ein bestimmtes elektronisches System mit einer definierten Mikroarchitektur zu erzeugen, und wobei die Trainingsdaten so ausgewählt sind, dass sie nur Codeabschnitte umfassen, die mit der Mikroarchitektur dieses elektronischen Systems verbunden sind.

2. Verfahren nach einem der vorhergehenden Ansprüche, wobei die Informationen, die die bestimmte Leistungsprüfungsaufgabe angeben, die der Codeabschnitt durchzuführen ausgelegt ist, eine oder mehrere der Folgenden umfassen: (i) eine oder mehrere Metriken in Bezug auf die Leistungsprüfungsaufgabe, die als Ausgabe bereitgestellt werden sollten, wenn der Codeabschnitt ausgeführt wird; (ii) eine Softwarecodesprache, in der der Codeabschnitt bereitgestellt werden sollte.

3. Verfahren nach Anspruch 1 oder 2, wobei die Codeabschnitte mit natürlichsprachlichen Informationen annotiert sind, derart, dass das Modell dazu ausgelegt ist, Eingabeaufforderungen zu verarbeiten, die in natürlicher Sprache bereitgestellt werden.

4. Computerprogrammprodukt, umfassend Anweisungen, die bei Ausführung durch einen Datenprozessor ein Verfahren nach einem der vorhergehenden Ansprüche durchführen.

5. Sprachmodell (50) zum Erzeugen von Softwarecodeabschnitten, die bei Ausführung durch einen Prozessor innerhalb eines elektronischen Systems dazu ausgelegt sind, eine bestimmte Aufgabe zur Prüfung der Leistung einer spezifischen Verarbeitungsschaltung innerhalb der Mikroarchitektur des elektronischen Systems durchzuführen, wobei das Sprachmodell (50) durch ein Verfahren nach einem der Ansprüche 1 bis 3 erzeugt wird, und wobei das Sprachmodell (50) betreibbar ist, um als Eingabe eine Eingabeaufforderung (51) zu empfangen, die Softwarecode zur Prüfung der Leistung einer spezifischen Verarbeitungsschaltung innerhalb eines elektronischen Systems mit einer bestimmten Mikroarchitektur anfordert, und um einen oder mehrere Softwarecodeabschnitte (52) zur Ausführung durch einen Prozessor des elektronischen Systems zur Prüfung der Leistung der spezifizierten Verarbeitungsschaltung auszugeben.

6. Verfahren zum Erzeugen von Softwarecodeabschnitten (52), die bei Ausführung durch einen Prozessor innerhalb eines elektronischen Systems dazu ausgelegt sind, eine bestimmte Aufgabe zur Prüfung der Leistung einer spezifischen Verarbeitungsschaltung innerhalb des elektronischen Systems durchzuführen, wobei das Verfahren ein Sprachmodell (50) verwendet, das durch ein Verfahren nach einem der Ansprüche 1 bis 3 erzeugt wurde, wobei das Verfahren umfasst:
Bereitstellen, als Eingabe für das Sprachmodell (50), einer Eingabeaufforderung (51), die Softwarecode zur Prüfung der Leistung einer spezifischen Verarbeitungsschaltung innerhalb eines elektronischen Systems mit einer bestimmten Mikroarchitektur anfordert; und
Bereitstellen, durch das Sprachmodell (50), als Ausgabe eines oder mehrerer Softwarecodeabschnitte (52) zur Ausführung durch einen Prozessor des elektronischen Systems zur Prüfung der Leistung der spezifizierten Verarbeitungsschaltung.

7. Verfahren nach Anspruch 6, wobei das Sprachmodell eine Vielzahl von Kandidaten-Softwarecodeabschnitten erzeugt, und wobei das Verfahren ferner das Anwenden einer oder mehrerer Stichproben- oder Filtertechniken umfasst, um einen oder mehrere Softwarecodeabschnitte zur Ausführung und Auswertung auszuwählen.

## Revendications

1. Procédé mis en œuvre par ordinateur pour l'entraînement d'un modèle de langage (50) destiné à générer des portions de code logiciel (52) qui, lorsqu'elles sont exécutées par un processeur au sein d'un système électronique, sont configurées pour exécuter une certaine tâche permettant de tester la performance d'un circuit de traitement spécifique au sein de la microarchitecture du système électronique,
dans lequel le modèle de langage (50) est apte à recevoir en entrée une invite (51) demandant un code logiciel pour tester la performance d'un circuit de traitement spécifique au sein d'un système électronique ayant une microarchitecture particulière et à produire en sortie une ou plusieurs portions de code logiciel (52) destinées à être exécutées par un processeur du système électronique pour tester la performance du circuit de traitement spécifié,
le procédé comprenant un processus d'entraînement réalisé en plusieurs étapes, comprenant :
l'obtention d'un premier modèle de langage qui a été entraîné sur un premier ensemble de données d'entraînement (301), le premier ensemble de données d'entraînement comprenant un référentiel de code logiciel générique ; puis
le ré-entraînement du premier modèle de langage pour affiner le modèle en vue de la génération des portions de code logiciel (52) qui, lorsqu'elles sont exécutées par un processeur au sein d'un système électronique, sont configurées pour exécuter une certaine tâche permettant de tester la performance d'un circuit de traitement spécifique au sein de la microarchitecture du système électronique, dans lequel le ré-entraînement est réalisé par :
la fourniture, en entrée du processus de ré-entraînement, d'un corpus de données d'entraînement (302) qui comprend une pluralité de portions de code (501), chacune de la pluralité de portions de code (501) étant conçue pour exécuter une certaine tâche permettant de tester la performance d'un circuit de traitement spécifique au sein d'un système électronique ayant une microarchitecture particulière, chacune de la pluralité de portions de code (501) étant ainsi associée à une caractéristique de microarchitecture particulière, et dans lequel chacune de la pluralité de portions de code (201) est annotée avec une information respective indicative de la tâche spécifique de test de performance que la portion de code est conçue pour exécuter ; et
le ré-entraînement du modèle de langage en utilisant les données d'entraînement fournies ;
dans lequel :
(a) chacune de la pluralité de portions de code est en outre annotée avec l'ensemble des caractéristiques de microarchitecture (502) auquel la portion de code est associée, de sorte que le modèle de langage est apte à générer des portions de code logiciel pour différentes implémentations de microarchitecture, les caractéristiques de microarchitecture souhaitées étant fournies en entrée du modèle dans le cadre de l'invite (51), et dans lequel l'ensemble des caractéristiques de microarchitecture
auquel la portion de code est associée, et qui sont utilisées pour annoter les données d'entraînement, comprend au moins l'un des éléments suivants : (i) un type du circuit de traitement ; (ii) une taille du circuit de traitement ; (iii) un agencement de mémoire cache associé au circuit de traitement ; (iv) une architecture de jeu d'instructions du circuit de traitement ; (v) un fabricant du circuit de traitement ; ou
(b) dans lequel le modèle de langage est entraîné pour générer des portions de code logiciel pour un système électronique particulier, ayant une microarchitecture définie, et dans lequel les données d'entraînement sont sélectionnées pour n'inclure que des portions de code qui sont associées à la microarchitecture de ce système électronique.

2. Le procédé de l'une quelconque des revendications précédentes, dans lequel l'information indicative de la certaine tâche de test de performance que la portion de code est conçue pour exécuter comprend une ou plusieurs des éléments suivants : (i) une ou plusieurs métriques relatives à la tâche de test de performance qui doivent être fournies en sortie lorsque la portion de code est exécutée ; (ii) un langage de code logiciel dans lequel la portion de code doit être fournie.

3. Le procédé de la revendication 1 ou 2, dans lequel les portions de code sont annotées avec une information en langage naturel, de sorte que le modèle est configuré pour traiter des invites qui sont fournies en langage naturel.

4. Un produit de programme informatique comprenant des instructions qui, lorsqu'elles sont exécutées par un processeur de données, exécutent un procédé selon l'une quelconque des revendications précédentes.

5. Un modèle de langage (50) pour générer des portions de code logiciel qui, lorsqu'elles sont exécutées par un processeur au sein d'un système électronique, sont configurées pour exécuter une certaine tâche permettant de tester la performance d'un circuit de traitement spécifique au sein de la microarchitecture du système électronique, dans lequel le modèle de langage (50) est généré par un procédé selon l'une quelconque des revendications 1 à 3, et dans lequel le modèle de langage (50) est apte à recevoir en entrée une invite (51) demandant un code logiciel pour tester la performance d'un circuit de traitement spécifique au sein d'un système électronique ayant une microarchitecture particulière et à produire en sortie une ou plusieurs portions de code logiciel (52) destinées à être exécutées par un processeur du système électronique pour tester la performance du circuit de traitement spécifié.

6. Un procédé de génération de portions de code logiciel (52) qui, lorsqu'elles sont exécutées par un processeur au sein d'un système électronique, sont configurées pour exécuter une certaine tâche permettant de tester la performance d'un circuit de traitement spécifique au sein de la microarchitecture du système
électronique, le procédé utilisant un modèle de langage (50) qui a été généré par un procédé selon l'une quelconque des revendications 1 à 3, le procédé comprenant :
la fourniture en entrée au modèle de langage (50) d'une invite (51) demandant un code logiciel pour tester la performance d'un circuit de traitement spécifique au sein d'un système électronique ayant une microarchitecture particulière ; et
la fourniture par le modèle de langage (50), en sortie, d'une ou plusieurs portions de code logiciel (52) destinées à être exécutées par un processeur du système électronique pour tester la performance du circuit de traitement spécifié.

7. Le procédé de la revendication 6, dans lequel le modèle de langage génère une pluralité de portions de code logiciel candidates, et dans lequel le procédé comprend en outre l'application d'une ou plusieurs techniques d'échantillonnage ou de filtrage pour sélectionner une ou plusieurs portions de code logiciel destinées à être exécutées et évaluées.
